# EUROPÄISCHE PATENTSCHRIFT

(11) **EP 1 396 438 B1**
(45) Veröffentlichungstag und Bekanntmachung des Hinweises auf die Patenterteilung: **24.05.2006**
(21) Anmeldenummer: 03016482.6
(22) Anmeldetag: 22.07.2003
(51) Int. Cl.: B65D 71/50

(54) **Vorrichtung zur Halterung von Klemmschellen in einer vorbestimmten Lage**
Device for holding hose clamps in a predetermined position
Dispositif pour retenir des colliers de serrage dans une position prédéterminée

(30) Priorität: 06.09.2002 DE 10241221
(43) Veröffentlichungstag der Anmeldung: 10.03.2004
(73) Patentinhaber: Rasmussen GmbH, 63477 Maintal (DE)
(72) Erfinder: Gyöngyösi, Jürgen, 63456 Hanau (DE); Hauke, Michael, 63607 Wächtersbach (DE)
(74) Vertreter: Knoblauch, Andreas

(56) Entgegenhaltungen:
- DE-A- 19 648 674
- DE-U- 1 913 822
- DE-U- 29 620 338
- US-A- 3 243 220

## Beschreibung

Die Erfindung bezieht sich auf eine Vorrichtung zur Halterung von Klemmschellen in einer vorbestimmten Lage, wobei die Klemmschellen ein etwa radial von ihrem Umfang abstehendes Spannteil mit einem sich in Umfangsrichtung erstreckenden Fortsatz aufweisen, insbesondere Federbandschellen.

Eine bekannte Vorrichtung dieser Art (DE 100 31 000 A1) besteht aus Klebestreifen, mittels denen die Klemmschellen koaxial nebeneinander in einer Reihe zusammengeklebt werden. Klebestreifen sind zwar ein einfaches Mittel, um die Klemmschellen zusammenzuhalten. Um die Klemmschellen jedoch in einer vorbestimmten relativen Drehwinkellage mittels der Klebestreifen zu verbinden, müssen die Klemmschellen zuvor in dieser vorbestimmten relativen Drehwinkellage angeordnet und gehalten werden. Dies erfordert entweder eine erhebliche manuelle Geschicklichkeit oder eine zusätzliche Vorrichtung, um sie zuvor vor dem Zusammenkleben mittels der Klebestreifen in der vorbestimmten relativen Drehwinkellage zu halten. Das Abtrennen der Klemmschellen von den Klebestreifen, insbesondere um sie einzeln in der vorbestimmten Drehwinkellage in eine Montagevorrichtung, insbesondere eine Spannzange, einzulegen, erfordert ein stückweises Abtrennen der Streifen bei jeder Klemmschelle und ist daher zeitaufwendig. Darüber hinaus bleibt in der Regel zumindest ein Teil des Klebstoffs an der Klemmschelle haften, was unerwünscht ist.

Eine weitere Vorrichtung dieser Art ist in Dokmment US 3 243 220 offenbart. Diese Vorrichtung weist die Merkmale des Oberbegriffs des Anspruchs 1 auf.

Der Erfindung liegt die Aufgabe zugrunde, eine Vorrichtung der eingangs genannten Art anzugeben, die einfacher zu handhaben ist.

Erfindungsgemäß ist diese Aufgabe dadurch gelöst, daß die Vorrichtung als Schiene mit einem Längsschlitz ausgebildet ist, in den die Klemmschellen mit ihrem Spannteil von einem offenen Ende des Längsschlitzes her einführbar und mit ihrem Fortsatz auf dem einen Rand des Längsschlitzes abstützbar sind.

Bei dieser Lösung können die Klemmschellen manuell auf einfache Weise nacheinander in dem Schlitz der Schiene eingehängt werden. In dieser Schiene behalten die Klemmschellen ihre relative Lage, z.B. während eines Transports, sicher bei. Um zu verhindern, daß sie von selbst aus dem Längsschlitz herausfallen, kann der Längsschlitz an seinem einen Ende geschlossen und an seinem anderen Ende verschließbar sein.

Zur Entnahme brauchen die Klemmschellen nur aus dem Längsschlitz herausgezogen oder -geschoben zu werden, nachdem zuvor der Verschluß geöffnet oder entfernt wurde. Es ist aber auch möglich, die Schiene mitsamt den Schellen in einen vertikalen Schacht einzuführen, wie er häufig bei der Montage der Klemmschellen in Kraftfahrzeugen benutzt wird, aus dem sie dann am unteren Ende einzeln entnommen und in eine Montagevorrichtung oder Zange eingesetzt werden können, nachdem die Schiene aus dem Schacht herausgezogen wurde.

Vorzugsweise ist die Schiene ein Rohr, dessen Innenseite in den Winkel zwischen dem sich an den Fortsatz anschließenden äußeren Endabschnitt des Spannteils und dem Fortsatz nach innen ragt. Ein solches Rohr ist auf einfache Weise herstellbar und verhindert eine relative Drehung der Klemmschellen, ohne die Schiene zur Entnahme der Klemmschellen zunächst horizontal halten zu müssen, so daß sich die Klemmschellen unter ihrem Eigengewicht in die vorbestimmte relative Drehwinkellage drehen.

Insbesondere kann dafür gesorgt sein, daß die offene Querschnittsfläche des Rohres der in Axialrichtung der Klemmschelle gesehenen Kontur des Spannteils und seines Fortsatzes entspricht. Hierbei liegt die Innenseite des Rohres, bis auf ein Spiel, an allen Breitseiten der Spannteile und ihrer Fortsätze an, so daß die Klemmschellen allenfalls im Rahmen des Spiels relativ zueinander verdrehbar sind. Dennoch kann der Durchmesser der Klemmschellen nahezu beliebig groß sein, sofern die Spannteile und Fortsätze bei allen Klemmschellen gleich sind.

Wenn das Rohr überwiegend aus Kunststoff besteht, kann es auf einfache Weise hergestellt werden.

Um eine beliebige Klemmschelle einzeln aus der in dem Rohr aufgenommenen Reihe von Klemmschellen entnehmen zu können, ohne weitere Klemmschellen aus dem Rohr zu entfernen, kann eine Ausgestaltung der Vorrichtung darin bestehen, daß der Kunststoff elastisch biegsam ist und das Rohr in seiner einen, sich an den Längsschlitz anschließenden Seitenwand bis zum Längsschlitz durchgehende Querschlitze aufweist, deren Abstand der axialen Breite der Klemmschellen entspricht. Aufgrund der Biegsamkeit des Kunststoffs lassen sich dann die zwischen benachbarten Querschlitzen liegenden Seitenwandabschnitte bei einer Entnahme der hinter diesem Seitenwandabschnitt eingehängten Klemmschelle mittels dieser hochbiegen, bis die Klemmschelle frei entnehmbar ist.

Die Erfindung und ihre Weiterbildungen werden nachstehend anhand der beiliegenden Zeichnungen zweier Ausführungsbeispiele näher beschrieben. Darin stellen dar:
- Fig. 1: eine Endansicht eines ersten Ausführungsbeispiels einer erfindungsgemäßen Vorrichtung mit darin eingehängten Klemmschellen, von denen in dieser Ansicht nur eine sichtbar ist,
- Fig. 2: eine perspektivische Ansicht der in Fig. 1 dargestellten Vorrichtung mit den darin eingehängten Klemmschellen und
- Fig. 3: ein weiteres Ausführungsbeispiel einer erfindungsgemäßen Vorrichtung mit darin eingehängten Klemmschellen.

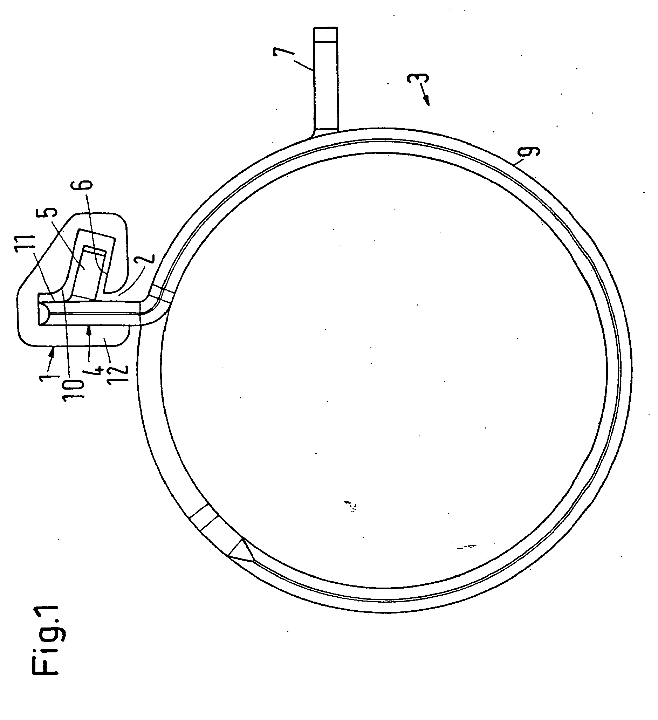

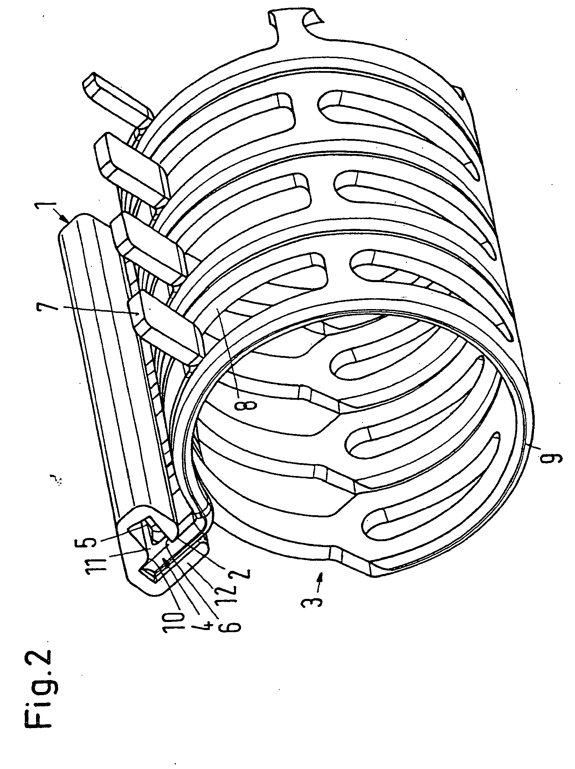

Die in den Fig. 1 und 2 dargestellte Vorrichtung ist eine Schiene in Form eines mehreckigen Rohres 1 mit einem Längsschlitz 2, in den Klemmschellen 3 in Form von sogenannten Federbandschellen mit einem etwa radial von ihrem Umfang abstehenden Spannteil 4, das einen sich in Umfangsrichtung erstreckenden Fortsatz 5 aufweist, von einem offenen Ende des Längsschlitzes 2 her einführbar und mit ihrem Fortsatz 5 auf dem einen Rand 6 des Längsschlitzes 2 abstützbar sind. Ein weiteres Spannteil 7 der Klemmschelle 3 ist am Ende eines durch einen Schlitz 8 des Federbandes 9 hindurchgeführten Endabschnitts des Federbandes 9 ausgebildet. Die Innenseite 10 des Rohres ragt in den Winkel zwischen dem sich an den Fortsatz 5 anschließenden äußeren Endabschnitt 11 des Spannteils 4 und dem Fortsatz 5 nach innen.

Insgesamt entspricht die offene Querschnittsfläche des Rohres 1 gegenüber dem Längsschlitz 2 der in Axialrichtung der Klemmschelle gesehenen Kontur des Spannteils 4 und seines Fortsatzes 5, wobei die dem Fortsatz 5 abgekehrte Seite des Spannteils 4 an der einen Seitenwand 12, die eben ausgebildet ist, abgestürzt wird.

Die Klemmschellen 3 sind alle gleich ausgebildet und nehmen mithin in dem Rohr 1 die gleiche relative Drehwinkellage zueinander ein. Sie lassen sich auf einfache Weise von Hand in der dargestellten Lage vom einen Ende des Rohres 1 her mit ihren Spannteilen 4 in den Längsschlitz 2 bzw. in das Rohr 1 einführen, wobei das in den Fig. 1 und 2 nicht sichtbare Ende des Längsschlitzes 2 geschlossen und das sichtbare Ende mittels eines nicht dargestellten Verschlusses verschließbar sein kann.

Die mit ihrem Spannteil 4 in dem Längsschlitz 2 des Rohres 1 eingehängten Klemmschellen 3 sind (bis auf ein Spiel) nicht relativ zueinander drehbar und behalten daher während des Transports oder der Handhabung des Rohres 1 ihre relative Drehwinkellage bei.

Um die Klemmschellen 3 auf einem Schlauch zu montieren, der auf einem Rohrstutzen o.dgl. festgeklemmt werden soll, kann das Rohr 1, mit dem geöffneten Ende voran, zusammen mit den Klemmschellen 3 in einen senkrechten Schacht eingeführt werden, aus dem sie - nach dem Herausziehen des Rohres 1 aus dem Schacht - einzeln entnommen und in eine Vorrichtung oder Zange zum Öffnen oder geöffnet, d.h. im vorliegenden Falle aufgeweiteten Zustand, gehalten und über den Schlauch geschoben werden, bevor sie mitsamt dem Schlauch auf den Stutzen geschoben werden.

Die rohrförmige Halterungsvorrichtung 1 ist auf einfache Weise aus Kunststoff herstellbar, kann jedoch auch aus Metall hergestellt werden.

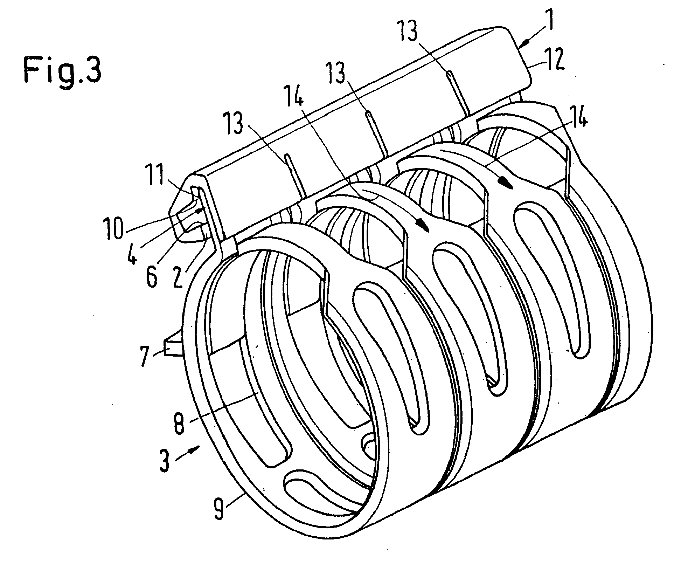

Das in Fig. 3 dargestellte Ausführungsbeispiel der Halterungsvorrichtung ist ebenfalls eine Schiene in Form eines Rohres 1 und unterscheidet sich von dem in den Fig. 1 und 2 dargestellten nur darin, daß die eine Seitenwand 12, die sich an den Längsschlitz 2 anschließt, durchgehende Querschlitze 13 aufweist, deren Abstand der axialen Breite der Klemmschellen 3 entspricht. Das Rohr 1 besteht aus elastisch biegsamem Kunststoff. Die Klemmschellen 3 lassen sich daher in Richtung der Pfeile 14 unter gleichzeitiger Aufbiegung der zwischen den Querschlitzen 13 liegenden Abschnitte der Seitenwand 12 einzeln entnehmen, ohne alle Klemmschellen 3 der Reihe nach in Längsrichtung aus dem Rohr 1 zu entfernen.

## Patentansprüche

1. Anordnung aus einer Haltevorrichtung für einzelne Gegenstände und den Gegenständen, wobei die Haltevorrichtung als Schiene (1) mit einem Längsschlitz (2) ausgebildet ist, der einen hinterschnittenen Rand aufweist und in den die Gegenstände von einem offenen Ende des Längsschlitzes (2) her eingeführt und mit einem Fortsatz auf dem Rand abgestützt sind, **dadurch gekennzeichnet, daß** die Gegenstände Klemmschellen mit einem etwa radial von ihrem Umfang abstehenden Spannteil sind, von dem der Fortsatz (5) in nur einer Umfangsrichtung der jeweiligen Klemmschelle absteht, und daß die Schiene (1) überwiegend aus elastisch biegsamem Kunststoff besteht und nur der eine Rand des Längsschlitzes (2) hinterschnitten ist.

2. Anordnung nach Anspruch 1, **dadurch gekennzeichnet, daß** die Schiene ein Rohr (1) ist, dessen Innenseite (10) in den Winkel zwischen dem sich an den Fortsatz (5) anschließenden äußeren Endabschnitt (11) des Spannteils (4) und dem Fortsatz (5) nach innen ragt.

3. Anordnung nach Anspruch 2, **dadurch gekennzeichnet, daß** die offene Querschnittsfläche des Rohres (1) der in Axialrichtung der Klemmschelle (3) gesehenen Kontur des Spannteils (4) und seines Fortsatzes (5) entspricht.

4. Anordnung nach einem der Ansprüche 1 bis 3, **dadurch gekennzeichnet, daß** der Längsschlitz (2) an seinem einen Ende geschlossen und an seinem anderen Ende verschließbar ist.

5. Anordnung nach einem der Ansprüche 1 bis 4, **dadurch gekennzeichnet, daß** die Schiene (1) in ihrer einen, sich an den Längsschlitz (2) anschließenden Seitenwand (12) bis zum Längsschlitz durchgehende Querschlitze (13) aufweist, deren Abstand der axialen Breite der Klemmschellen entspricht.

## Claims

1. Arrangement consisting of a device for holding individual articles and of the articles, wherein the holding device is designed as a rail (1) with a longitudinal slot (2) having an undercut edge and into which the articles are introduced from an open end of the longitudinal slot (2) and supported on the edge by a projection, **characterised in that** the articles are clamps having a tensioning part projecting approximately radially away from their circumference, wherein the projection (5) extends from the tensioning part in only one circumferential direction of the respective clamp, and that the rail (1) consists primarily of elastically bendable plastic material, and only one edge of the longitudinal slot (2) is undercut.

2. Arrangement according to claim 1, **characterised in that** the rail is a tube (1), the inner side (10) of which projects inwardly into a corner formed between the projection (5) and an outer end section (11) of the tensioning part (4) adjoining the projection (5).

3. Arrangement according to claim 2, wherein the open cross-sectional area of the tube (1) corresponds to the contour of the tensioning part (4) and its projection (5) when viewed in an axial direction of the clamp (3).

4. Arrangement according to any of the claims 1 to 3, **characterised in that** the longitudinal slot (2) is closed at its one end and closable at its other end.

5. Arrangement according to any of the claims 1 to 4, **characterised in that** the rail (1) has in its one sidewall (12) adjoining the longitudinal slot (2) transverse slots (13) opening into the longitudinal slot (2), and that the distance of the transverse slots (13) relative to one another corresponds to an axial width of the clamps (3).

## Revendications

1. Agencement comprenant un dispositif de retenue d'objets individuels, et lesdits objets, sachant que le dispositif de retenue est réalisé sous la forme d'une glissière (1) munie d'une fente longitudinale (2) qui présente un bord contre-dépouillé et dans laquelle les objets sont introduits, à partir d'une extrémité ouverte de ladite fente longitudinale (2), et prennent appui sur le bord par un appendice, **caractérisé par le fait que** les objets sont des colliers de serrage comportant une partie de blocage qui dépasse sensiblement de leur pourtour, dans le sens radial, et au-delà de laquelle l'appendice (5) ne fait saillie que dans une direction périphérique du collier de serrage considéré ; et **par le fait que** la glissière (1) est majoritairement constituée d'une matière plastique douée de souplesse élastique, et seul l'un des bords de la fente longitudinale (2) est contre-dépouillé.

2. Agencement selon la revendication 1, **caractérisé par le fait que** la glissière est une tubulure (1) dont la face interne (10) fait saillie, vers l'intérieur, dans la cornière située entre l'appendice (5) et la région extrême externe (11) de la partie de blocage (4) qui est attenante audit appendice (5).

3. Agencement selon la revendication 2, **caractérisé par le fait que** la superficie de section transversale ouverte de la tubulure (1) correspond au profil, observé dans la direction axiale du collier de serrage (3), dans la partie de blocage (4) et de son appendice (5).

4. Agencement selon l'une des revendications 1 à 3, **caractérisé par le fait que** la fente longitudinale (2) est fermée à l'une de ses extrémités, et peut être obturée à son autre extrémité.

5. Agencement selon l'une des revendications 1 à 4, **caractérisé par le fait que** la glissière (1) comporte, dans l'une (12) de ses parois latérales attenante à la fente longitudinale (2), des fentes transversales (13) qui s'étendent d'un trait jusqu'à ladite fente longitudinale, et dont l'espacement correspond à la largeur axiale des colliers de serrage.
